# EUROPEAN PATENT SPECIFICATION

(11) **EP 3 904 445 B1**
(45) Date of publication and mention of the grant of the patent: **05.03.2025**
(21) Application number: 21164828.2
(22) Date of filing: 25.03.2021
(51) Int. Cl.: B60C 1/00, C08L 7/00, C08L 9/06, C08L 57/02, C08L 53/02, C08L 25/06, C08L 47/00

(54) **TIRE RUBBER COMPOSITION AND TIRE**
REIFENKAUTSCHUKZUSAMMENSETZUNG UND REIFEN
COMPOSITION DE CAOUTCHOUC DE PNEU ET PNEU

(30) Priority: 13.04.2020 JP 2020071868
(43) Date of publication of application: 03.11.2021
(73) Proprietor: Sumitomo Rubber Industries, Ltd., Kobe-shi, Hyogo 651-0072 (JP)
(72) Inventor: IKEJIRI, Shinji, Kobe-shi, Hyogo 651-0072 (JP)
(74) Representative: TBK

(56) References cited:
- EP-A1- 3 456 764
- EP-A1- 3 552 840
- US-A1- 2015 011 676
- US-A1- 2019 010 313

## Description

### TECHNICAL FIELD

The present invention relates to tire rubber compositions and tires including the tire rubber compositions.

### BACKGROUND ART

Proposed techniques for improving the wet grip performance of tires include: a method of incorporating silica into a tread rubber composition; a method of increasing the amount of low softening point resins, liquid polymers, and the like; and a method of incorporating a cold-resistant plasticizer (for example, see Patent Literature 1). In recent years, however, it has become desirable to further improve wet grip performance.

### CITATION LIST

### PATENT LITERATURE

Patent Literature 1: JP 2000-159935 A

Further, EP 3552840 A1 discloses a rubber composition for tires containing, based on 100% by mass of a rubber component therein: 3-25% by mass of a component derived from an aromatic vinyl monomer; 0-15% by mass of a component derived from a butadiene monomer and having a vinyl configuration; 1-90% by mass of a component derived from a butadiene monomer and having a cis configuration; and 1-6% by mass of a component derived from an isoprene monomer and having a cis configuration. US 2019/010313 A1 discloses a pneumatic tire formed from a rubber composition which includes: a rubber component; a plasticizer component; and a filler component. EP 3456764 A1 discloses rubber composition for treads which contains a rubber component and a plasticizer.

### SUMMARY OF INVENTION

### TECHNICAL PROBLEM

The present invention has been made in view of the above circumstances and aims to provide tire rubber compositions having improved wet grip performance during high-speed running, as well as tires including the tire rubber compositions.

### SOLUTION TO PROBLEM

The present invention relates to tire rubber compositions, containing: at least one rubber component (A) including an isoprene-based rubber and a styrene-butadiene-based rubber; at least one C5 resin and/or C5/C9 resin (B); and at least one aromatic vinyl polymer (C).

The aromatic vinyl polymer is at least one selected from the group consisting of aromatic vinyl thermoplastic elastomers, homopolymers of aromatic vinyl compounds, and copolymers of aromatic vinyl compounds and terpene compounds.

Preferably, the aromatic vinyl polymer contains a styrene unit.

Preferably, the styrene-butadiene-based rubber has a styrene content of 30% by mass or higher.

Preferably, the rubber compositions contain 10 to 60 parts by mass of the at least one aromatic vinyl polymer per 100 parts by mass of the at least one rubber component.

Preferably, the rubber compositions contain 10 to 60 parts by mass in total of the at least one C5 resin and/or C5/C9 resin per 100 parts by mass of the at least one rubber component.

The present invention also relates to tires, including a tread formed from any of the rubber compositions.

### ADVANTAGEOUS EFFECTS OF INVENTION

The tire rubber compositions of the present invention contain at least one rubber component (A) including an isoprene-based rubber and a styrene-butadiene-based rubber, at least one C5 resin and/or C5/C9 resin (B), and at least one aromatic vinyl polymer (C), wherein the aromatic vinyl polymer is at least one selected from the group consisting of aromatic vinyl thermoplastic elastomers, homopolymers of aromatic vinyl compounds, and copolymers of aromatic vinyl compounds and terpene compounds. Such tire rubber compositions have improved wet grip performance during high-speed running.

### DESCRIPTION OF EMBODIMENTS

The tire rubber compositions of the present invention contain at least one rubber component (A) including an isoprene-based rubber and a styrene-butadiene-based rubber, at least one C5 resin and/or C5/C9 resin (B), and at least one aromatic vinyl polymer (C). Thus, the tire rubber compositions provide excellent wet grip performance during high-speed running.

The above-described effect of the rubber compositions may be due to the following mechanism of action.

In the low strain regions, the isoprene-based rubber and styrene-butadiene-based rubber polymers may form pseudo-crosslinks with the aromatic vinyl polymer (e.g., styrene-based polymer) by intermolecular interaction, resulting in the rubber compound having increased elastic modulus. On the other hand, in the high strain regions, the intermolecular distance may be increased to cancel the interaction, resulting in reduced elastic modulus. In contrast, the C5 resin and/or C5/C9 resin reduce the elastic modulus of the rubber compound in all the strain regions. Therefore, the elastic modulus in the low strain regions hardly changes, and only the elastic modulus in the high strain regions decreases. Accordingly, it is possible to greatly deform the ground contact surface, to which high strain will be applied during high-speed running, to increase the friction coefficient of the tread face, while ensuring the rigidity of the non-ground contact surfaces, to which less strain will be applied. This mechanism of action is believed to provide improved wet grip performance during high-speed running.

### (Rubber component (A))

The rubber compositions contain at least one rubber component (Component (A)) including an isoprene-based rubber and a styrene-butadiene-based rubber.

The term "isoprene-based rubber" refers to a polymer containing isoprene as a structural unit in which the amount of the isoprene unit based on 100% by mass of the total structural units in the polymer is 95% by mass or more. The amount of the isoprene unit is preferably 98% by mass or more and may be 100% by mass.

The amount of the isoprene-based rubber(s) based on 100% by mass of the rubber components in the rubber compositions is preferably 20% by mass or more, more preferably 30% by mass or more, still more preferably 40% by mass or more, particularly preferably 45% by mass or more. The upper limit of the amount is preferably 90% by mass or less, more preferably 75% by mass or less, still more preferably 65% by mass or less. When the amount is within the range indicated above, good properties such as wet grip performance during high-speed running tend to be obtained.

The weight average molecular weight (Mw) of the isoprene-based rubbers is preferably 60,000 or more, more preferably 80,000 or more, still more preferably 100,000 or more. The upper limit of the Mw is preferably 3,000,000 or less, more preferably 2,500,000 or less, still more preferably 2,000,000 or less. When the Mw is within the range indicated above, good properties such as wet grip performance during high-speed running tend to be obtained.

Examples of the isoprene-based rubbers include natural rubbers (NR), polyisoprene rubbers (IR), refined NR, modified NR, and modified IR. The NR and IR may be those commonly used in the tire industry, such as: SIR20, RSS#3, and TSR20 for the NR; and IR2200 for the IR. Examples of the refined NR include deproteinized natural rubbers (DPNR) and highly purified natural rubbers (UPNR). Examples of the modified NR include epoxidized natural rubbers (ENR), hydrogenated natural rubbers (HNR), and grafted natural rubbers. Examples of the modified IR include epoxidized polyisoprene rubbers, hydrogenated polyisoprene rubbers, and grafted polyisoprene rubbers. These may be used alone or in combinations of two or more.

The term "styrene-butadiene-based rubber" refers to a polymer containing styrene and butadiene as structural units in which the combined amount of the styrene and butadiene units based on 100% by mass of the total structural units in the polymer is 95% by mass or more. The combined amount of the styrene and butadiene units is preferably 98% by mass or more and may be 100% by mass.

The amount of the styrene-butadiene-based rubber(s) based on 100% by mass of the rubber components in the rubber compositions is preferably 5% by mass or more, more preferably 20% by mass or more, still more preferably 35% by mass or more, particularly preferably 45% by mass or more. The upper limit of the amount is preferably 80% by mass or less, more preferably 70% by mass or less, still more preferably 60% by mass or less. When the amount is within the range indicated above, good properties such as wet grip performance during high-speed running tend to be obtained.

The weight average molecular weight (Mw) of the styrene-butadiene-based rubbers is preferably 60,000 or more, more preferably 200,000 or more, still more preferably 300,000 or more, particularly preferably 350,000 or more. The upper limit of the Mw is preferably 1,500,000 or less, more preferably 800,000 or less, still more preferably 600,000 or less, particularly preferably 450,000 or less. When the Mw is within the range indicated above, good properties such as wet grip performance during high-speed running tend to be obtained.

The styrene content of the styrene-butadiene-based rubbers is preferably 15% by mass or higher, more preferably 20% by mass or higher, still more preferably 25% by mass or higher, further preferably 30% by mass or higher. The styrene content is preferably 60% by mass or lower, more preferably 50% by mass or lower, still more preferably 40% by mass or lower. When the styrene content is within the range indicated above, good properties such as wet grip performance during high-speed running tend to be obtained. In particular, a higher styrene content is believed to lead to easier interaction, thereby being more effective in improving wet grip performance during high-speed running.

The vinyl bond content of the styrene-butadiene-based rubbers is preferably 5% by mass or higher, more preferably 10% by mass or higher, still more preferably 20% by mass or higher, further preferably 25% by mass or higher. The vinyl bond content is preferably 50% by mass or lower, more preferably 40% by mass or lower, still more preferably 35 by mass or lower. When the vinyl bond content is within the range indicated above, good properties such as wet grip performance during high-speed running tend to be obtained.

The styrene-butadiene-based rubbers may be either non-oil extended styrene-butadiene-based rubbers or oil extended styrene-butadiene-based rubbers. The styrene-butadiene-based rubbers may be either unmodified styrene-butadiene-based rubbers or modified styrene-butadiene-based rubbers.

Any modified styrene-butadiene-based rubber having a functional group interactive with a filler such as silica may be used. Examples include a chain end-modified styrene-butadiene-based rubber obtained by modifying at least one chain end of a styrene-butadiene-based rubber with a compound (modifier) having the functional group (i.e., a chain end-modified styrene-butadiene-based rubber terminated with the functional group), a backbone-modified styrene-butadiene-based rubber having the functional group in the backbone, a backbone- and chain end-modified styrene-butadiene-based rubber having the functional group in both the backbone and chain end (e.g., a backbone- and chain end-modified styrene-butadiene-based rubber in which the backbone has the functional group, and at least one chain end is modified with the modifier), and a chain end-modified styrene-butadiene-based rubber that has been modified (coupled) with a polyfunctional compound having two or more epoxy groups in the molecule so that a hydroxy or epoxy group is introduced. These may be used alone or in combinations of two or more.

Examples of the functional group include amino, amide, silyl, alkoxysilyl, isocyanate, imino, imidazole, urea, ether, carbonyl, oxycarbonyl, mercapto, sulfide, disulfide, sulfonyl, sulfinyl, thiocarbonyl, ammonium, imide, hydrazo, azo, diazo, carboxyl, nitrile, pyridyl, alkoxy, hydroxyl, oxy, and epoxy groups. These functional groups may have a substituent. Preferred among these are amino groups (preferably amino groups whose hydrogen atom is replaced with a C1-C6 alkyl group), alkoxy groups (preferably C1-C6 alkoxy groups), alkoxysilyl groups (preferably C1-C6 alkoxysilyl groups), and amido groups.

The styrene-butadiene-based rubbers may be SBR products manufactured or sold by Sumitomo Chemical Co., Ltd., JSR Corporation, Asahi Kasei Corporation, Zeon Corporation, etc.

Examples of rubber components (Component (A)) other than the isoprene-based rubbers and styrene-butadiene-based rubbers which may be used include rubbers used in the tire field, such as polybutadiene rubbers (BR), acrylonitrilebutadiene rubbers (NBR), chloroprene rubbers (CR), and butyl rubbers (IIR).

Herein, the weight average molecular weight (Mw) and number average molecular weight (Mn) can be determined by gel permeation chromatography (GPC) (GPC-8000 series available from Tosoh Corporation, detector: differential refractometer, column: TSKGEL SUPERMULTIPORE HZ-M available from Tosoh Corporation) calibrated with polystyrene standards. The vinyl bond content (1,2-butadiene unit content) can be determined by infrared absorption spectrometry. The styrene content can be determined by ¹H-NMR analysis.

### (C5 resin and/or C5/C9 resin (B))

The rubber compositions contain at least one C5 resin and/or C5/C9 resin (Component B).

The C5 resins and C5/C9 resins may be solid or liquid, preferably solid, at room temperature (25°C).

The term "C5 resin" refers to a polymer containing a C5 hydrocarbon or a multimer (e.g., a dimer) thereof as a structural unit. Examples of the C5 hydrocarbon or multimer thereof include isoprene, pentane, and cyclopentadiene. Specific examples of the C5 resins include copolymers of isoprene and styrene. Other examples of the C5 resins include aliphatic petroleum resins produced by (co)polymerization of C5 fractions obtained from naphtha cracking processes in the petrochemical industry. The C5 fractions include olefinic hydrocarbons such as 1-pentene, 2-pentene, and 2-methyl-1-butene, and diolefinic hydrocarbons such as 2-methyl-1,3-butadiene, 1,2-pentadiene, and 1,3-pentadiene.

Examples of the C5/C9 resins include mixtures of the above-described C5 resins and C9 resins. The term "C9 resin" refers to a polymer containing a C9 hydrocarbon or a multimer (e.g., a dimer) thereof as a structural unit. Examples of the C9 hydrocarbon or multimer (e.g., dimer) thereof include indene, methylstyrene, and vinyltoluene. Specific examples of the C9 resins include solid polymers produced by (co)polymerization of C9 fractions in the presence of Friedel-Crafts catalysts or the like, such as copolymers mainly containing indene, copolymers mainly containing methylindene, copolymers mainly containing αmethylstyrene, and copolymers mainly containing vinyltoluene. Preferably, the C5 resins are C5 aliphatic resins, and the C9 resins are C9 alicyclic resins.

The combined amount of the C5 resins and the C5/C9 resins per 100 parts by mass of the rubber components is preferably 3 parts by mass or more, more preferably 5 parts by mass or more, still more preferably 10 parts by mass or more. The combined amount is also preferably 60 parts by mass or less, more preferably 30 parts by mass or less, still more preferably 20 parts by mass or less. When the combined amount is within the range indicated above, good properties such as wet grip performance during high-speed running tend to be obtained. In particular, it is believed that elastic modulus can be sufficiently reduced by incorporating at least a predetermined amount of the resins, while rigidity can be ensured by adjusting the combined amount to not more than a predetermined amount. It should be noted that the amount of the C5 resins or C5/C9 mixture resins alone is preferably in the same range as indicated above.

The softening point of the C5 resins and/or C5/C9 resins is preferably 30°C or higher, more preferably 60°C or higher, but is preferably 160°C or lower, more preferably 150°C or lower. When the softening point is within the range indicated above, good properties such as wet grip performance during high-speed running tend to be obtained.

Herein, the softening point of the polymers (resins, polymers, etc.) is determined in accordance with JIS K 6220-1:2001 using a ring and ball softening point measuring apparatus and defined as the temperature at which the ball drops down.

The weight average molecular weight (Mw) of the C5 resins and/or C5/C9 resins is preferably 1000 or more, more preferably 2000 or more, still more preferably 2500 or more, but is preferably 5000 or less, more preferably 4000 or less, still more preferably 3500 or less. When the Mw is within the range indicated above, good properties such as wet grip performance during high-speed running tend to be obtained.

The number average molecular weight (Mn) of the C5 resins and/or C5/C9 resins is preferably 500 or more, more preferably 800 or more, still more preferably 1000 or more, but is preferably 2000 or less, more preferably 1300 or less, still more preferably 1100 or less. When the Mn is within the range indicated above, good properties such as wet grip performance during high-speed running tend to be obtained.

### (Aromatic vinyl polymer (C))

The rubber compositions contain at least one aromatic vinyl polymer (Component (C)). The aromatic vinyl polymer is at least one selected from the group consisting of aromatic vinyl thermoplastic elastomers, homopolymers of aromatic vinyl compounds, and copolymers of aromatic vinyl compounds and terpene compounds.

The aromatic vinyl polymers may be solid or liquid, preferably solid, at room temperature (25°C). The aromatic vinyl polymers may be used alone or in combinations of two or more.

The term "aromatic vinyl polymer" refers to a polymer containing an aromatic vinyl compound structural unit (a structural unit derived from an aromatic vinyl compound (aromatic vinyl unit)). Examples of the aromatic vinyl compound include styrene, α-methylstyrene, 1-vinylnaphthalene, 3-vinyltoluene, ethylvinylbenzene, divinylbenzene, 4-cyclohexylstyrene, and 2,4,6-trimethylstyrene. These may be used alone or in combinations of two or more. Styrene or α-methylstyrene is preferred, and styrene is more preferred. In other words, the aromatic vinyl unit is preferably a styrene unit.

The aromatic vinyl polymers may suitably be aromatic vinyl thermoplastic elastomers (thermoplastic elastomers having an aromatic vinyl compound block). Examples of the aromatic vinyl thermoplastic elastomers include copolymers (block copolymers) including a hard segment serving as a crosslinking point and a soft segment having rubber elasticity.

Examples of the hard segment include polystyrene, polypropylene, polyester, polyamide, poly(vinyl chloride), and polyurethane. Examples of the soft segment include vinyl-polydiene, polyisoprene, polybutadiene, polyethylene, polychloroprene, and poly 2,3-dimethylbutadiene. One or two or more of these may be used.

The aromatic vinyl thermoplastic elastomers preferably contain, in addition to an aromatic vinyl unit, a non-conjugated olefin unit. The term "non-conjugated olefin unit" refers to a structural unit derived from a non-conjugated olefin. Examples of the non-conjugated olefin include ethylene, propylene, 1-butene, 3-methyl-1-butene, 1-pentene, 1-hexene, 1-heptene, and 1-octene. These may be used alone or in combinations of two or more. Ethylene, 1-butene, and 3-methyl-1-butene are preferred, and ethylene is more preferred.

The non-conjugated olefin unit in the aromatic vinyl thermoplastic elastomers may be produced by polymerizing a non-conjugated olefin such as ethylene, or by polymerizing a conjugated diene compound such as 1,3-butadine and hydrogenating the resulting conjugated diene unit. In other words, the aromatic vinyl thermoplastic elastomers containing a non-conjugated olefin unit may be copolymers of a non-conjugated olefin and other monomers, or hydrogenated products of copolymers (hydrogenated copolymers) of a conjugated diene compound and other monomers.

The percentage of the aromatic vinyl compound unit of the aromatic vinyl thermoplastic elastomers is preferably 5% by mass or higher, more preferably 10% by mass or higher, still more preferably 15% by mass or higher, but is preferably 70% by mass or lower, more preferably 50% by mass or lower, still more preferably 40% by mass or lower, particularly preferably 30% by mass or lower. When the percentage is within the range indicated above, good properties such as wet grip performance during high-speed running tend to be obtained.

The percentages of the aromatic vinyl compound unit and the non-conjugated olefin unit can be calculated from the results of ¹H-NMR analysis.

The aromatic vinyl thermoplastic elastomers are preferably styrene block-containing thermoplastic elastomers (styrene thermoplastic elastomers).

Specific examples of the styrene thermoplastic elastomers include styrene-vinylisoprene-styrene triblock copolymers (SIS), styrene-isobutylene diblock copolymers (SIB), styrene-butadiene-styrene triblock copolymers (SBS), styrene-ethylene/butylene-styrene triblock copolymers (SEBS), styrene-ethylene/propylene-styrene triblock copolymers (SEPS), styrene-ethylene/ethylene/propylene-styrene triblock copolymers (SEEPS), styrene-butadiene/butylene-styrene triblock copolymers (SBBS), and styrene-ethylene-butadiene copolymers. These may be used alone or in combinations of two or more. Styrene-ethylene/butylene-styrene triblock copolymers (SEBS) or styrene-ethylene-butadiene copolymers are preferred among these.

Still other examples of the aromatic vinyl polymers include homopolymers of aromatic vinyl compounds (e.g., styrene) and copolymers of aromatic vinyl compounds (e.g., styrene) and additional monomers. Examples of the additional monomers include terpene compounds and α-methylstyrene. Among these, terpene compounds are preferred; in other words, copolymers of aromatic vinyl compounds and terpene compounds are preferred. In the case of homopolymers of aromatic vinyl compounds or copolymers of aromatic vinyl compounds and terpene compounds, higher compatibility with both the isoprene-based rubbers and the styrene-butadiene-based rubbers is believed to facilitate the formation of pseudo-crosslinks between them, thereby being more effective in improving wet grip performance during high-speed running.

The term "terpene compound" refers to a hydrocarbon having a composition represented by (C₅H₈)ₙ or an oxygencontaining derivative thereof, each of which has a terpene backbone and is classified as a monoterpene (C₁₀H₁₆), sesquiterpene (C₁₅H₂₄), diterpene (C₂₀H₃₂), or other terpenes. Examples of such terpene compounds include α-pinene, β-pinene, dipentene, limonene, myrcene, alloocimene, ocimene, α-phellandrene, α-terpinene, γ-terpinene, terpinolene, 1,8-cineole, 1,4-cineole, α-terpineol, β-terpineol, and γ-terpineol.

The softening point of the aromatic vinyl polymers is preferably 40°C or higher, more preferably 70°C or higher, still more preferably 90°C or higher, but is preferably 160°C or lower, more preferably 140°C or lower, still more preferably 130°C or lower. When the softening point is within the range indicated above, good properties such as wet grip performance during high-speed running tend to be obtained.

The amount of the aromatic vinyl polymers per 100 parts by mass of the rubber components is preferably 3 parts by mass or more, more preferably 5 parts by mass or more, still more preferably 10 parts by mass or more, but is preferably 60 parts by mass or less, more preferably 30 parts by mass or less, still more preferably 20 parts by mass or less. When the amount is within the range indicated above, good properties such as wet grip performance during high-speed running tend to be obtained. In particular, a larger amount of the aromatic vinyl polymers is believed to lead to easier interaction, thereby being more effective in improving wet grip performance during high-speed running.

It should be noted that herein, a polymer containing an isoprene unit as a structural unit corresponds to an isoprene-based rubber when it has an isoprene unit content of 95% by mass or higher based on 100% by mass of the total structural units in the polymer and also has a Mw of 5000 or more, while it corresponds to a C5 resin when it has an isoprene unit content of lower than 95% by mass or a Mw of less than 5000. Moreover, a polymer containing styrene and butadiene as structural units corresponds to a styrene-butadiene-based rubber when it has a combined content of styrene and butadiene units of 95% by mass or higher and also has a Mw of 5000 or more, while it corresponds to an aromatic vinyl polymer when it has a combined content of styrene and butadiene units of lower than 95% by mass or a Mw of less than 5000. Moreover, a polymer containing an aromatic vinyl unit (e.g., styrene unit) and a C5 hydrocarbon unit (e.g., isoprene unit) as structural units corresponds to an aromatic vinyl polymer, rather than a C5 resin. Moreover, a polymer containing an aromatic vinyl unit (e.g., styrene unit) and a C5 hydrocarbon multimer unit (e.g., terpene unit) as structural units corresponds to a C5 resin, rather than an aromatic vinyl polymer. Moreover, a polymer containing an aromatic vinyl unit and a C9 hydrocarbon and/or its multimer unit (e.g., indene unit) as structural units corresponds to a C9 resin, rather than an aromatic vinyl polymer. It should also be noted that such polymers (e.g., polymers having an isoprene unit content of 95% by mass or higher and a Mw of 5000 or more, polymers having a combined content of styrene and butadiene units of 95% by mass or higher and a Mw of 5000 or more) may be solid or liquid at room temperature (25°C).

The aromatic vinyl polymers may be commercially available from Asahi Kasei Corporation, Yasuhara Chemical Co., Ltd., etc.

The rubber compositions may contain at least one resin other than the C5 resins, C5/C9 resins, and aromatic vinyl polymers which is solid at room temperature (25°C) (solid resin). Any solid resin generally used in the tire industry may be used, and examples include p-t-butylphenol acetylene resins and acrylic resins.

### (Silica)

From the standpoint of wet grip performance during high-speed running, the rubber compositions preferably contain at least one silica as filler. Examples of the silica include dry silica (anhydrous silica) and wet silica (hydrous silica). Wet silica is preferred among these because it contains a large number of silanol groups. Commercial products available from Degussa, Rhodia, Tosoh Silica Corporation, Solvay Japan, Tokuyama Corporation, etc. may be used. These may be used alone or in combinations of two or more.

The amount of the silica per 100 parts by mass of the rubber components is preferably 25 parts by mass or more, more preferably 50 parts by mass or more, still more preferably 60 parts by mass or more. The upper limit of the amount is preferably 150 parts by mass or less, more preferably 100 parts by mass or less, still more preferably 80 parts by mass or less. When the amount is within the range indicated above, good properties such as wet grip performance during high-speed running tend to be obtained.

The nitrogen adsorption specific surface area (N₂SA) of the silica is preferably 70 m²/g or more, more preferably 140 m²/g or more, still more preferably 160 m²/g or more, particularly preferably 200 m²/g or more. The upper limit of the N₂SA of the silica is preferably 300 m²/g or less, more preferably 250 m²/g or less. When the N₂SA is within the range indicated above, good properties such as wet grip performance during high-speed running tend to be obtained.

The N₂SA of the silica is measured by the BET method in accordance with ASTM D3037-93.

From the standpoint of wet grip performance during high-speed running, the percentage of the silica based on 100% by mass of the combined amount of the silica and carbon black in the rubber compositions is preferably 50% by mass or more, more preferably 80% by mass or more, still more preferably 90% by mass or more.

### (Silane coupling agent)

When the rubber compositions contain silica, they preferably contain at least one silane coupling agent together with the silica. Any silane coupling agent may be used, and examples include sulfide silane coupling agents such as bis(3-triethoxysilylpropyl)tetrasulfide, bis(2-triethoxysilylethyl)tetrasulfide, bis(4-triethoxysilylbutyl)tetrasulfide, bis(3-trimethoxysilylpropyl)-tetrasulfide, bis(2-trimethoxysilylethyl)tetrasulfide, bis(2-triethoxysilylethyl)trisulfide, bis(4-trimethoxysilylbutyl)trisulfide, bis(3-triethoxysilylpropyl)disulfide, bis(2-triethoxysilylethyl)disulfide, bis(4-triethoxysilylbutyl)disulfide, bis(3-trimethoxysilylpropyl)disulfide, bis(2-trimethoxysilylethyl)disulfide, bis(4-trimethoxysilylbutyl)disulfide, 3-trimethoxysilylpropyl-N,N-dimethylthiocarbamoyl tetrasulfide, 2-triethoxysilylethyl-N,N-dimethylthiocarbamoyl tetrasulfide, and 3-triethoxysilylpropyl methacrylate monosulfide; mercapto silane coupling agents such as 3-mercaptopropyltrimethoxysilane and 2-mercaptoethyltriethoxysilane; vinyl silane coupling agents such as vinyltriethoxysilane and vinyltrimethoxysilane; amino silane coupling agents such as 3-aminopropyltriethoxysilane and 3-aminopropyltrimethoxysilane; glycidoxy silane coupling agents such as γ-glycidoxypropyltriethoxysilane and γ-glycidoxypropyltrimethoxysilane; nitro silane coupling agents such as 3-nitropropyltrimethoxysilane and 3-nitropropyltriethoxysilane; and chloro silane coupling agents such as 3-chloropropyltrimethoxysilane and 3-chloropropyltriethoxysilane. Commercial products available from Degussa, Momentive, Shin-Etsu Silicone, Tokyo Chemical Industry Co., Ltd., AZmax. Co., Dow Corning Toray Co., Ltd., etc. may be used. These may be used alone or in combinations of two or more. Sulfide and mercapto silane coupling agents are preferred among these, with mercapto silane coupling agents being more preferred.

Examples of the mercapto silane coupling agents include silane coupling agents having mercapto groups and silane coupling agents having protected mercapto groups. These may be used alone or in combinations of two or more.

Suitable mercapto silane coupling agents include (i) silane coupling agents represented by the following formula (2-1); and (ii) silane coupling agents containing linking units A and B represented by the following formulas (2-2) and (2-3), respectively.

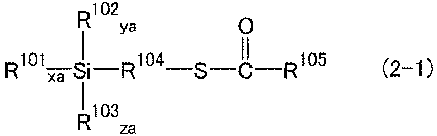

In formula (2-1), R¹⁰¹ represents a monovalent group selected from -Cl, -Br, -OR¹⁰⁶, -O(O=)CR¹⁰⁶, -ON=CR¹⁰⁶R¹⁰⁷, - ON=CR¹⁰⁶R¹⁰⁷, -NR¹⁰⁶R¹⁰⁷, or -(OSiR¹⁰⁶R¹⁰⁷)ₕ(OSiR¹⁰⁶R¹⁰⁷R¹⁰⁸) where R¹⁰⁶, R¹⁰⁷, and R¹⁰⁸ may be the same or different and each represent a hydrogen atom or a C1-C18 monovalent hydrocarbon group, and h represents an average number of 1 to 4; R¹⁰² represents R¹⁰¹, a hydrogen atom, or a C1-C18 monovalent hydrocarbon group; R¹⁰³ represents a -[O(R¹⁰⁹O)ⱼ]-group where R¹⁰⁹ represents a C1-C18 alkylene group, and j represents an integer of 1 to 4; R¹⁰⁴ represents a C1-C18 divalent hydrocarbon group; R¹⁰⁵ represents a C1-C18 monovalent hydrocarbon group; and xa, ya, and za are numbers satisfying the following relationships: xa + ya + 2za = 3, 0 ≤ xa ≤ 3, 0 ≤ ya ≤ 2, and 0 ≤ za ≤ 1.

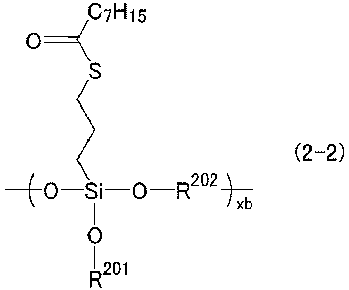

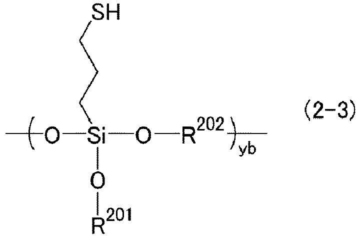

In formulas (2-2) and (2-3), xb represents an integer of 0 or more; yb represents an integer of 1 or more; R²⁰¹ represents a hydrogen atom, a halogen atom, a branched or unbranched C1-C30 alkyl group, a branched or unbranched C2-C30 alkenyl group, a branched or unbranched C2-C30 alkynyl group, or the alkyl group in which a terminal hydrogen atom is replaced with a hydroxy or carboxyl group; and R²⁰² represents a branched or unbranched C1-C30 alkylene group, a branched or unbranched C2-C30 alkenylene group, or a branched or unbranched C2-C30 alkynylene group, provided that R²⁰¹ and R²⁰² may together form a cyclic structure.

Specific examples of R¹⁰², R¹⁰⁵, R¹⁰⁶, R¹⁰⁷, and R¹⁰⁸ in formula (2-1) include a methyl group, an ethyl group, a n-propyl group, an isopropyl group, a n-butyl group, an isobutyl group, a sec-butyl group, a tert-butyl group, a pentyl group, a hexyl group, an octyl group, a decyl group, a dodecyl group, a cyclopentyl group, a cyclohexyl group, a vinyl group, a propenyl group, an allyl group, a hexenyl group, an octenyl group, a cyclopentenyl group, a cyclohexenyl group, a phenyl group, a tolyl group, a xylyl group, a naphthyl group, a benzyl group, a phenethyl group, and a naphthylmethyl group.

Examples of linear alkylene groups that may be used as R¹⁰⁹ in formula (2-1) include a methylene group, an ethylene group, a n-propylene group, a n-butylene group, and a hexylene group. Examples of branched alkylene groups that may be used as R¹⁰⁹ include an isopropylene group, an isobutylene group, and a 2-methylpropylene group.

Specific examples of the silane coupling agents of formula (2-1) include 3-hexanoylthiopropyltriethoxysilane, 3-octanoylthiopropyltriethoxysilane, 3-decanoylthiopropyltriethoxysilane, 3-lauroylthiopropyltriethoxysilane, 2-hexanoylthioethyltriethoxysilane, 2-octanoylthioethyltriethoxysilane, 2-decanoylthioethyltriethoxysilane, 2-lauroylthioethyltriethoxysilane, 3-hexanoylthiopropyltrimethoxysilane, 3-octanoylthiopropyltrimethoxysilane, 3-decanoylthiopropyltrimethoxysilane, 3-lauroylthiopropyltrimethoxysilane, 2-hexanoylthioethyltrimethoxysilane, 2-octanoylthioethyltrimethoxysilane, 2-decanoylthioethyltrimethoxysilane, and 2-lauroylthioethyltrimethoxysilane. Among these, 3-octanoylthiopropyltriethoxysilane (NXT available from Momentive) is particularly preferred. These silane coupling agents may be used alone or in combinations of two or more.

When the silane coupling agents containing linking units A and B of formulas (2-2) and (2-3) are used, the increase in viscosity during processing can be reduced as compared to when using polysulfidosilanes such as bis(3-triethoxysilylpropyl)tetrasulfide. This is probably because, since the sulfide moiety of the linking unit A is a C-S-C bond, these silane coupling agents are thermally more stable than tetrasulfides and disulfides, and thus the Mooney viscosity is less likely to increase.

Moreover, the decrease in scorch time can be reduced as compared to when using mercaptosilanes such as 3-mercaptopropyltrimethoxysilane. This is probably because, though the linking unit B has a mercaptosilane structure, the -C₇H₁₅ moiety of the linking unit A may cover the -SH group of the linking unit B to inhibit it from reacting with the polymers, and therefore scorching is less likely to occur.

The linking unit A content of the silane coupling agents having the above structure is preferably 30 mol% or higher, more preferably 50 mol% or higher, but is preferably 99 mol% or lower, more preferably 90 mol% or lower. Moreover, from the standpoint of reactivity with silica, the linking unit B content is preferably 1 mol% or higher, more preferably 5 mol% or higher, still more preferably 10 mol% or higher, but is preferably 70 mol% or lower, more preferably 65 mol% or lower, still more preferably 55 mol% or lower. Moreover, the combined content of the linking units A and B is preferably 95 mol% or higher, more preferably 98 mol% or higher, particularly preferably 100 mol%.

The linking unit A or B content refers to the amount including the linking unit A or B present at the chain end of the silane coupling agent, if any. In the case where the linking unit A or B is present at the chain end of the silane coupling agent, its form is not limited as long as it forms a unit corresponding to formula (2-2) representing the linking unit A or to formula (2-3) representing the linking unit B.

Examples of the halogen atom for R²⁰¹ include chlorine, bromine, and fluorine.

Examples of the branched or unbranched C1-C30 alkyl group for R²⁰¹ include a methyl group, an ethyl group, a n-propyl group, an isopropyl group, a n-butyl group, an isobutyl group, a sec-butyl group, a tert-butyl group, a pentyl group, a hexyl group, a heptyl group, a 2-ethylhexyl group, an octyl group, a nonyl group, and a decyl group. The alkyl group preferably has 1 to 12 carbon atoms.

Examples of the branched or unbranched C2-C30 alkenyl group for R²⁰¹ include a vinyl group, a 1-propenyl group, a 2-propenyl group, a 1-butenyl group, a 2-butenyl group, a 1-pentenyl group, a 2-pentenyl group, a 1-hexenyl group, a 2-hexenyl group, and a 1-octenyl group. The alkenyl group preferably has 2 to 12 carbon atoms.

Examples of the branched or unbranched C2-C30 alkynyl group for R²⁰¹ include an ethynyl group, a propynyl group, a butynyl group, a pentynyl group, a hexynyl group, a heptynyl group, an octynyl group, a nonynyl group, a decynyl group, an undecynyl group, and a dodecynyl group. The alkynyl group preferably has 2 to 12 carbon atoms.

Examples of the branched or unbranched C1-C30 alkylene group for R²⁰² include an ethylene group, a propylene group, a butylene group, a pentylene group, a hexylene group, a heptylene group, an octylene group, a nonylene group, a decylene group, an undecylene group, a dodecylene group, a tridecylene group, a tetradecylene group, a pentadecylene group, a hexadecylene group, a heptadecylene group, and an octadecylene group. The alkylene group preferably has 1 to 12 carbon atoms.

Examples of the branched or unbranched C2-C30 alkenylene group for R²⁰² include a vinylene group, a 1-propenylene group, a 2-propenylene group, a 1-butenylene group, a 2-butenylene group, a 1-pentenylene group, a 2-pentenylene group, a 1-hexenylene group, a 2-hexenylene group, and a 1-octenylene group. The alkenylene group preferably has 2 to 12 carbon atoms.

Examples of the branched or unbranched C2-C30 alkynylene group for R²⁰² include an ethynylene group, a propynylene group, a butynylene group, a pentynylene group, a hexynylene group, a heptynylene group, an octynylene group, a nonynylene group, a decynylene group, an undecynylene group, and a dodecynylene group. The alkynylene group preferably has 2 to 12 carbon atoms.

In the silane coupling agents containing linking units A and B of formulas (2-2) and (2-3), the total number of repetitions (xb + yb) consisting of the sum of the number of repetitions (xb) of the linking unit A and the number of repetitions (yb) of the linking unit B is preferably in the range of 3 to 300. When the total number of repetitions is within the range indicated above, the - C₇H₁₅ moiety of the linking unit A may cover the mercaptosilane of the linking unit B to reduce the decrease in scorch time while ensuring good reactivity with the silica and the rubber components.

Examples of the silane coupling agents containing linking units A and B of formulas (2-2) and (2-3) include NXT-Z30, NXT-Z45, and NXT-Z60 all available from Momentive. These may be used alone or in combinations of two or more.

Other suitable mercapto silane coupling agents include (iii) silane coupling agents represented by the following formula (2-4).

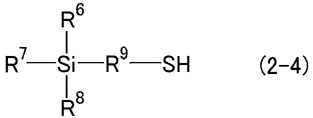

In formula (2-4), R⁶ to R⁸ may be the same as or different from one another and each represent a branched or unbranched C1-C12 alkyl group, a branched or unbranched C1-C12 alkoxy group, or the group: -O-(R¹⁰-O)_{z}-R¹¹ where R¹⁰ groups, the number of which is indicated by z, may be the same as or different from one another and each represent a branched or unbranched divalent C1-C30 hydrocarbon group, R¹¹ represents a branched or unbranched C1-C30 alkyl group, a branched or unbranched C2-C30 alkenyl group, a C6-C30 aryl group, or a C7-C30 aralkyl group, and z represents an integer of 1 to 30; and R⁹ represents a branched or unbranched C1-C6 alkylene group.

R⁶ to R⁸ each represent a branched or unbranched C1-C12 alkyl group, a branched or unbranched C1-C12 alkoxy group, or the group: -O-(R¹⁰-O)_{z}-R¹¹. Preferably, at least one of R⁶ to R⁸ groups is the group: -O-(R¹⁰-O)_{z}-R¹¹. More preferably, two of R⁶ to R⁸ groups are each the group: -O-(R¹⁰-O)_{z}-R¹¹ and the other is a branched or unbranched C1-C12 alkoxy group.

Examples of the branched or unbranched C1-C12, preferably C1-C5, alkyl group for R⁶ to R⁸ include a methyl group, an ethyl group, a n-propyl group, an isopropyl group, a n-butyl group, an iso-butyl group, a sec-butyl group, a tert-butyl group, a pentyl group, a hexyl group, a heptyl group, a 2-ethylhexyl group, an octyl group, and a nonyl group.

Examples of the branched or unbranched C1-C12, preferably C1-C5, alkoxy group for R⁶ to R⁸ include a methoxy group, an ethoxy group, a n-propoxy group, an isopropoxy group, a n-butoxy group, an iso-butoxy group, a sec-butoxy group, a tert-butoxy group, a pentyloxy group, a hexyloxy group, a heptyloxy group, a 2-ethylhexyloxy group, an octyloxy group, and a nonyloxy group.

In the group: -O-(R¹⁰-O)_{z}-R¹¹ for R⁶ to R⁸, R¹⁰ represents a branched or unbranched divalent hydrocarbon group having 1 to 30 carbon atoms, preferably 1 to 15 carbon atoms, more preferably 1 to 3 carbon atoms. Examples of the hydrocarbon group include branched or unbranched C1-C30 alkylene groups, branched or unbranched C2-C30 alkenylene groups, branched or unbranched C2-C30 alkynylene groups, and C6-C30 arylene groups. Branched or unbranched C1-C30 alkylene groups are preferred among these.

Examples of the branched or unbranched C1-C30, preferably C1-C15, more preferably C1-C3, alkylene groups for R¹⁰ include a methylene group, an ethylene group, a propylene group, a butylene group, a pentylene group, a hexylene group, a heptylene group, an octylene group, a nonylene group, a decylene group, an undecylene group, a dodecylene group, a tridecylene group, a tetradecylene group, a pentadecylene group, a hexadecylene group, a heptadecylene group, and an octadecylene group.

Examples of the branched or unbranched C2-C30, preferably C2-C15, more preferably C2-C3, alkenylene groups for R¹⁰ include a vinylene group, a 1-propenylene group, a 2-propenylene group, a 1-butenylene group, a 2-butenylene group, a 1-pentenylene group, a 2-pentenylene group, a 1-hexenylene group, a 2-hexenylene group, and a 1-octenylene group.

Examples of the branched or unbranched C2-C30, preferably C2-C15, more preferably C2-C3, alkynylene groups for R¹⁰ include an ethynylene group, a propynylene group, a butynylene group, a pentynylene group, a hexynylene group, a heptynylene group, an octynylene group, a nonynylene group, a decynylene group, an undecynylene group, and a dodecynylene group.

Examples of the C6-C30, preferably C6-C15, arylene groups for R¹⁰ include a phenylene group, a tolylene group, a xylylene group, and a naphthylene group.

The symbol z represents an integer of 1 to 30, preferably of 2 to 20, more preferably of 3 to 7, still more preferably of 5 or 6.

R¹¹ represents a branched or unbranched C1-C30 alkyl group, a branched or unbranched C2-C30 alkenyl group, a C6-C30 aryl group, or a C7-C30 aralkyl group, preferably a branched or unbranched C1-C30 alkyl group.

Examples of the branched or unbranched C1-C30, preferably C3-C25, more preferably C10-C15, alkyl group for R¹¹ include a methyl group, an ethyl group, a n-propyl group, an isopropyl group, a n-butyl group, an iso-butyl group, a sec-butyl group, a tert-butyl group, a pentyl group, a hexyl group, a heptyl group, a 2-ethylhexyl group, an octyl group, a nonyl group, a decyl group, an undecyl group, a dodecyl group, a tridecyl group, a tetradecyl group, a pentadecyl group, and an octadecyl group.

Examples of the branched or unbranched C2-C30, preferably C3-C25, more preferably C10-C15, alkenyl group for R¹¹ include a vinyl group, a 1-propenyl group, a 2-propenyl group, a 1-butenyl group, a 2-butenyl group, a 1-pentenyl group, a 2-pentenyl group, a 1-hexenyl group, a 2-hexenyl group, a 1-octenyl group, a decenyl group, an undecenyl group, a dodecenyl group, a tridecenyl group, a tetradecenyl group, a pentadecenyl group, and an octadecenyl group.

Examples of the C6-C30, preferably C10-C20, aryl group for R¹¹ include a phenyl group, a tolyl group, a xylyl group, a naphthyl group, and a biphenyl group.

Examples of the C7-C30, preferably C10-C20, aralkyl group for R¹¹ include a benzyl group and a phenethyl group.

Specific examples of the group: -O-(R¹⁰-O)_{z}-R¹¹ include -O-(C₂H₄-O)₅-C₁₁H₂₃, -O-(C₂H₄-O)₅-C₁₂H₂₅, -O-(C₂H₄-O)₅-C₁₃H₂₇, -O-(C₂H₄-O)₅-C₁₄H₂₉, -O-(C₂H₄-O)₅-C₁₅H₃₁, -O-(C₂H₄-O)₃-C₁₃H₂₇, -O-(C₂H₄-O)₄-C₁₃H₂₇, -O-(C₂H₄-O)₆-C₁₃H₂₇, and -O-(C₂H₄-O)₇-C₁₃H₂₇. Preferred among these are -O-(C₂H₄-O)₅-C₁₁H₂₃, -O-(C₂H₄-O)₅-C₁₃H₂₇, -O-(C₂H₄-O)₅-C₁₅H₃₁, and -O-(C₂H₄-O)₆-C₁₃H₂₇.

Examples of the branched or unbranched C1-C6, preferably C1-C5, alkylene group for R⁹ include those described for the branched or unbranched C1-C30 alkylene groups for R¹⁰.

Examples of the compounds of formula (2-4) include 3-mercaptopropyltrimethoxysilane, 3-mercaptopropyltriethoxysilane, 2-mercaptoethyltrimethoxysilane, 2-mercaptoethyltriethoxysilane, and a compound represented by the formula below (Si363 available from Evonik-Degussa). The compound of the formula below is suitable. These may be used alone or in combinations of two or more.

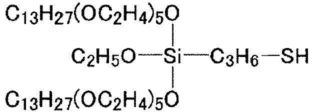

In the rubber compositions, the amount of the silane coupling agents, if present, per 100 parts by mass of the silica is preferably 1 part by mass or more, more preferably 2 parts by mass or more, but is preferably 20 parts by mass or less, more preferably 15 parts by mass or less. When the amount is not less than the lower limit, the effects such as improving dispersion tend to be sufficiently achieved. When the amount is not more than the upper limit, a sufficient coupling effect tends to be obtained, resulting in good reinforcing properties.

### (Carbon black)

The rubber compositions may contain at least one carbon black as filler. Any carbon black may be used, and examples include N134, N110, N220, N234, N219, N339, N330, N326, N351, N550, and N762. Commercial products available from Asahi Carbon Co., Ltd., Cabot Japan K.K., Tokai Carbon Co., Ltd., Mitsubishi Chemical Corporation, Lion Corporation, NSCC Carbon Co., Ltd., Columbia Carbon, etc. may be used. These may be used alone or in combinations of two or more.

The amount of the carbon black, if present, per 100 parts by mass of the rubber components is preferably 1 part by mass or more, more preferably 3 parts by mass or more, but is preferably 10 parts by mass or less, more preferably 7 parts by mass or less.

The nitrogen adsorption specific surface area (N₂SA) of the carbon black is preferably 50 m²/g or more, more preferably 80 m²/g or more, still more preferably 100 m²/g or more, but is preferably 200 m²/g or less, more preferably 150 m²/g or less, still more preferably 130 m²/g or less.

The nitrogen adsorption specific surface area of the carbon black is determined in accordance with JIS K6217-2:2001.

From the standpoint of properties such as wet grip performance during high-speed running, the combined amount of the silica and carbon black per 100 parts by mass of the rubber components in the rubber compositions is preferably 50 parts by mass or more, more preferably 55 parts by mass or more, still more preferably 60 parts by mass or more. The upper limit is preferably 120 parts by mass or less, more preferably 100 parts by mass or less, still more preferably 80 parts by mass or less.

### (Liquid plasticizer)

The rubber compositions may contain at least one liquid plasticizer.

The liquid plasticizers may be any plasticizer that is liquid at 25°C, and examples include oils. These may be used alone or in combinations of two or more.

Examples of the oils include process oils, vegetable oils, and mixtures thereof. Examples of the process oils include paraffinic process oils, aromatic process oils, and naphthenic process oils. Examples of the vegetable oils include castor oil, cotton seed oil, linseed oil, rapeseed oil, soybean oil, palm oil, coconut oil, peanut oil, rosin, pine oil, pine tar, tall oil, corn oil, rice oil, safflower oil, sesame oil, olive oil, sunflower oil, palm kernel oil, camellia oil, jojoba oil, macadamia nut oil, and tung oil. Commercial products available from Idemitsu Kosan Co., Ltd., Sankyo Yuka Kogyo K.K., ENEOS Corporation, Olisoy, H&R, Hokoku Corporation, Showa Shell Sekiyu K.K., Fuji Kosan Co., Ltd., The Nisshin OilliO Group, Ltd., etc. may be used.

The amount of the liquid plasticizers (the total liquid plasticizer content) per 100 parts by mass of the rubber components is preferably 10 parts by mass or more, more preferably 15 parts by mass or more, still more preferably 20 parts by mass or more. The upper limit is preferably 50 parts by mass or less, more preferably 40 parts by mass or less, still more preferably 35 parts by mass or less. When the amount is within the range indicated above, good properties such as wet grip performance during high-speed running tend to be obtained. The total liquid plasticizer content includes the amount of the extender oils of the oil extended rubbers, if used.

### (Other materials)

The rubber compositions may contain at least one sulfur.

Examples of the sulfur include those commonly used in the rubber industry, such as powdered sulfur, precipitated sulfur, colloidal sulfur, insoluble sulfur, highly dispersible sulfur, and soluble sulfur. Commercial products available from Tsurumi Chemical Industry Co., Ltd., Karuizawa Sulfur Co., Ltd., Shikoku Chemicals Corporation, Flexsys, Nippon Kanryu Industry Co., Ltd., Hosoi Chemical Industry Co., Ltd., etc. may be used. These may be used alone or in combinations of two or more.

The amount of the sulfur per 100 parts by mass of the rubber components is preferably 0.5 parts by mass or more, more preferably 1.5 parts by mass or more, but is preferably 6 parts by mass or less, more preferably 4 parts by mass or less. When the amount is within the range indicated above, good properties such as wet grip performance during high-speed running tend to be obtained.

The rubber compositions may contain at least one vulcanization accelerator.

Examples of the vulcanization accelerators include thiazole vulcanization accelerators such as 2-mercaptobenzothiazole and di-2-benzothiazolyl disulfide; thiuram vulcanization accelerators such as tetramethylthiuram disulfide (TMTD), tetrabenzylthiuram disulfide (TBzTD), and tetrakis(2-ethylhexyl)thiuram disulfide (TOT-N); sulfenamide vulcanization accelerators such as N-cyclohexyl-2-benzothiazolylsulfenamide (CBS), N-tert-butyl-2-benzothiazolylsulfenamide (TBBS), N-oxyethylene-2-benzothiazole sulfenamide, and N,N'-diisopropyl-2-benzothiazole sulfenamide; and guanidine vulcanization accelerators such as diphenylguanidine, diorthotolylguanidine, and orthotolylbiguanidine. Commercial products available from Sumitomo Chemical Co., Ltd., Ouchi Shinko Chemical Industrial Co., Ltd., etc. may be used. These may be used alone or in combinations of two or more.

The amount of the vulcanization accelerators per 100 parts by mass of the rubber components is preferably 1.5 parts by mass or more, more preferably 3.0 parts by mass or more, still more preferably 3.5 parts by mass or more, but is preferably 6.0 parts by mass or less, more preferably 5.0 parts by mass or less, still more preferably 4.0 parts by mass or less. When the amount is within the range indicated above, good properties such as wet grip performance during high-speed running tend to be obtained.

The rubber compositions may contain at least one zinc oxide.

The zinc oxide may be a conventional one. Commercial products available from Mitsui Mining & Smelting Co., Ltd., Toho Zinc Co., Ltd., HakusuiTech Co., Ltd., Seido Chemical Industry Co., Ltd., Sakai Chemical Industry Co., Ltd., etc. may be used. These may be used alone or in combinations of two or more.

The amount of the zinc oxide per 100 parts by mass of the rubber components is preferably 1 part by mass or more, more preferably 2 parts by mass or more, still more preferably 3 parts by mass or more, but is preferably 8 parts by mass or less, more preferably 6 parts by mass or less.

The rubber compositions may contain at least one wax.

Any wax may be used, and examples include petroleum waxes such as paraffin waxes and microcrystalline waxes; naturally-occurring waxes such as plant waxes and animal waxes; and synthetic waxes such as polymers of ethylene, propylene, or other similar monomers. Commercial products available from Ouchi Shinko Chemical Industrial Co., Ltd., Nippon Seiro Co., Ltd., Seiko Chemical Co., Ltd., etc. may be used. These may be used alone or in combinations of two or more.

The amount of the waxes per 100 parts by mass of the rubber components is preferably 1 part by mass or more, more preferably 2 parts by mass or more, but is preferably 6 parts by mass or less, more preferably 4 parts by mass or less.

The rubber compositions may contain at least one antioxidant.

Examples of the antioxidants include naphthylamine antioxidants such as phenyl-α-naphthylamine; diphenylamine antioxidants such as octylated diphenylamine and 4,4'-bis(α,α'-dimethylbenzyl)diphenylamine; p-phenylenediamine antioxidants such as N-isopropyl-N'-phenyl-p-phenylenediamine, N-(1,3-dimethylbutyl)-N'-phenyl-p-phenylenediamine, and N,N'-di-2-naphthyl-p-phenylenediamine; quinoline antioxidants such as 2,2,4-trimethyl-1,2-dihydroquinoline polymer; monophenolic antioxidants such as 2,6-di-t-butyl-4-methylphenol and styrenated phenol; and bis-, tris-, or polyphenolic antioxidants such as tetrakis[methylene-3-(3',5'-di-t-butyl-4'-hydroxyphenyl)propionate]methane. Commercial products available from Seiko Chemical Co., Ltd., Sumitomo Chemical Co., Ltd., Ouchi Shinko Chemical Industrial Co., Ltd., Flexsys, etc. may be used. These may be used alone or in combinations of two or more.

The amount of the antioxidants per 100 parts by mass of the rubber components is preferably 1 part by mass or more, more preferably 2 parts by mass or more, but is preferably 6 parts by mass or less, more preferably 4 parts by mass or less.

The rubber compositions may contain at least one stearic acid.

The stearic acid may be a conventional one. Commercial products available from NOF Corporation, Kao Corporation, FUJIFILM Wako Pure Chemical Corporation, Chiba Fatty Acid Co., Ltd., etc. may be used. These may be used alone or in combinations of two or more.

The amount of the stearic acid per 100 parts by mass of the rubber components is preferably 1 part by mass or more, more preferably 2 parts by mass or more, but is preferably 6 parts by mass or less, more preferably 4 parts by mass or less.

In addition to the above-described components, the rubber compositions may contain additives commonly used in the rubber industry, such as organic peroxides. The amount of each of the additives is preferably 0.1 to 200 parts by mass per 100 parts by mass of the rubber components.

The rubber compositions may be prepared, for example, by kneading the above-described components using a rubber kneading machine such as an open roll mill or a Banbury mixer, and then vulcanizing the kneaded mixture.

The kneading conditions are as follows. In a base kneading step of kneading additives other than sulfur and vulcanization accelerators, the kneading temperature is usually 100 to 180°C, preferably 120 to 170°C. In a final kneading step of kneading sulfur and vulcanization accelerators, the kneading temperature is usually 120°C or lower, preferably 85 to 110°C. The composition obtained after kneading sulfur and vulcanization accelerators is usually vulcanized by press vulcanization, for example. The vulcanization temperature is usually 140 to 190°C, preferably 150 to 185°C. The vulcanization time is usually 5 to 15 minutes.

The rubber compositions are suitable for use in treads (cap treads) of tires, for example.

The tires (for example, pneumatic tires) of the present invention can be produced from the above-described rubber compositions by usual methods. Specifically, an unvulcanized rubber composition as described above may be extruded into the shape of a tire component such as a tread and then assembled with other tire components in a usual manner in a tire building machine to build an unvulcanized tire, which may then be heated and pressurized in a vulcanizer to produce a tire.

The tires can be used as tires for passenger vehicles, large passenger vehicles, large SUVs, heavy duty vehicles such as trucks and buses, light trucks, or motorcycles, racing tires (high performance tires), or other similar tires. The tires may also be used as all-season tires, summer tires, winter tires (e.g., studless winter tires, cold weather tires), or other similar tires.

### EXAMPLES

The present invention will be specifically described with reference to, but not limited to, examples.

Rubber compositions of various formulations as shown in the table are prepared from the chemicals listed below on the assumption that they will be used in the tread of tires (tire size: 195/65R15). Then, the wet grip performance during high-speed running of these tires is calculated. The results are indicated in the "Evaluation" field of the table.

The chemicals used in the examples and comparative examples are described below.
NR: RSS#3
SBR 1: SBR1502 (styrene content: 25% by mass, vinyl bond content: 16% by mass, Mw: 490,000) available from JSR Corporation
SBR 2: Tufdene 3830 (styrene content: 33% by mass, vinyl bond content: 31% by mass, Mw: 420,000, oil content: 37.5 parts by mass per 100 parts by mass of rubber solids) available from Asahi Kasei Corporation
Carbon black: DIABLACK N220 (Mitsubishi Chemical Corporation, N₂SA: 114 m²/g)
Silica 1: ULTRASIL VN3 (N₂SA: 175 m²/g) available from Evonik Degussa
Silica 2: ULTRASIL 9000GR (N₂SA: 229 m²/g) available from Evonik
Silane coupling agent: NXT (3-octanoylthiopropyltriethoxysilane) available from Momentive
C5 resin 1: ESCOREZ 1102B (a copolymer of isoprene and styrene, softening point: 95°C) available from Exxon Mobil Corporation
C5/C9 resin 1: Petrotack 100V (C5/C9 resin, softening point: 94°C, Mw: 3900, Mn: 1200) available from Tosoh Corporation
C5 resin 2: Marukarez T-100AS (C5 petroleum resin, softening point: 102°C) available from Maruzen Petrochemical Co., Ltd.
Aromatic vinyl polymer 1: Production Example below (styrene content: 19% by mass, ethylene content: 78% by mass, butadiene content: 3.3% by mass)
Aromatic vinyl polymer 2: Tuftec H1521 (SEBS (hydrogenated SBS), styrene content: 18% by mass, combined content of ethylene, butylene, and butadiene: 82% by mass) available from Asahi Kasei Corporation
Aromatic vinyl polymer 3: YS resin SX100 (styrene homopolymer, softening point: 100°C) available from Yasuhara Chemical Co., Ltd.
Aromatic vinyl polymer 4: YS resin TO125 (aromatic modified terpene resin (copolymer of terpene compound and styrene), softening point: 125°C) available from Yasuhara Chemical Co., Ltd.
Aromatic vinyl polymer 5: HYBRAR 7125 (SEPS (hydrogenated SIS), styrene content: 20% by mass) available from Kuraray Co., Ltd.
Aromatic vinyl polymer 6: Tuftec H1043 (SEBS (hydrogenated SBS), styrene content: 67% by mass) available from Asahi Kasei Corporation
Oil: Diana Process NH-70S (aromatic process oil) available from Idemitsu Kosan Co., Ltd.
Zinc oxide: zinc oxide #1 available from Mitsui Mining & Smelting Co., Ltd.
Antioxidant: NOCRAC 6C (N-(1,3-dimethylbutyl)-N'-phenyl-p-phenylenediamine) available from Ouchi Shinko Chemical Industrial Co., Ltd.
Stearic acid: stearic acid "TSUBAKI" available from NOF Corporation
Wax: Ozoace 0355 available from Nippon Seiro Co., Ltd.
Sulfur: powdered sulfur available from Tsurumi Chemical Industry Co., Ltd.
Vulcanization accelerator 1: NOCCELER D (1,3-diphenylguanidine) available from Ouchi Shinko Chemical Industrial Co., Ltd.
Vulcanization accelerator 2: NOCCELER CZ (N-cyclohexyl-2-benzothiazolylsulfenamide) available from Ouchi Shinko Chemical Industrial Co., Ltd.

### <Production Example>

Styrene as an aromatic vinyl compound and cyclohexane are added to a sufficiently dried pressure resistant stainless steel reactor.

Separately, 1-benzyldimethylsilyl-3-methylindene [[1-(PhCH₂)Me₂Si]-3-Me]C₉H₆, a tris(bis(dimethylsilyl)amide)-gadolinium complex Gd[N(SiHMe₂)₂]₃, and trimethylaluminum are charged into a glass vessel in a nitrogen atmosphere in a glove box, and toluene is then added to conduct a reaction at 80°C for six hours. Thereto are added diisobutylaluminum hydride and toluene and then dimethylanilinium tetrakis(pentafluorophenyl)borate [Me₂NHPhB(C₆F₅)₄] to prepare a catalyst solution.

The catalyst solution is added to the pressure resistant stainless steel reactor and heated to 75°C.

Next, ethylene as a non-conjugated olefin compound and then a toluene solution containing 5 g of 1,3-butadiene as a conjugated diene compound are introduced into the pressure resistant stainless steel reactor to conduct a polymerization reaction at 75°C for four hours in total.

Thereafter, a solution of 2,2'-methylene-bis(4-ethyl-6-t-butylphenol) (NS-5) in isopropanol is added to the pressure resistant stainless steel reactor to stop the reaction. Then, a large amount of methanol is used to separate the reaction product, followed by vacuum drying at 50°C to obtain an aromatic vinyl polymer 1.

### (Preparation conditions)

The chemicals other than the sulfur and vulcanization accelerators in the formulation amounts shown in Table 1 are kneaded using a 1.7 L Banbury mixer (Kobe Steel, Ltd.) at 150°C for four minutes. Then, the sulfur and vulcanization accelerators are added, followed by kneading using an open roll mill at 80°C for five minutes to give an unvulcanized rubber composition. The unvulcanized rubber composition is formed into the shape of a cap tread and assembled with other tire components, followed by vulcanization at 170°C for 15 minutes to prepare a test tire (tire size: 195/65R15).

### (Wet grip performance during high-speed running (calculated from vehicle simulation evaluation))

The test tire is mounted on each wheel of a vehicle (a front-engine, front-wheel-drive domestic car with 2000 cc displacement). The braking distance from an initial speed of 100 km/h on wet asphalt is determined to calculate the wet grip performance (braking distance) during high-speed running of the vehicle. The results of wet grip performance during high-speed running (braking distances) of the formulation examples are expressed as an index relative to Comparative Example 6 (= 100). A higher index indicates better wet grip performance during high-speed running.

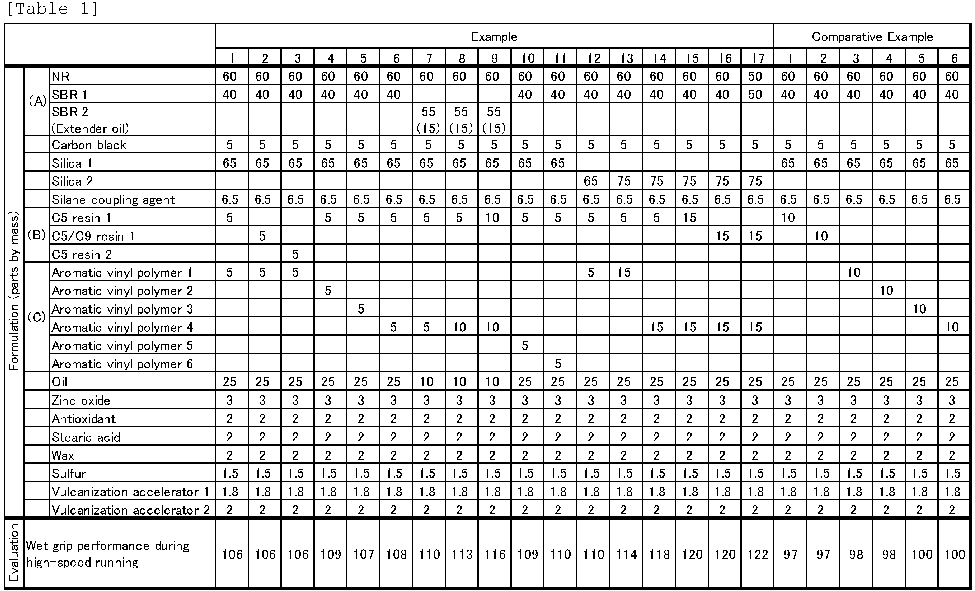

Provided are tire rubber compositions having improved wet grip performance during high-speed running, as well as tires including the tire rubber compositions. Included are tire rubber compositions containing at least one rubber component (A) including an isoprene-based rubber and a styrene-butadiene-based rubber, at least one C5 resin and/or C5/C9 resin (B), and at least one aromatic vinyl polymer (C).

## Claims

1. A tire, comprising a tread formed from a tire rubber composition,
the rubber composition comprising:
at least one rubber component (A) including an isoprene-based rubber and a styrene-butadiene-based rubber;
at least one C5 resin and/or C5/C9 resin (B); and
at least one aromatic vinyl polymer (C), wherein the aromatic vinyl polymer is at least one selected from the group consisting of aromatic vinyl thermoplastic elastomers, homopolymers of aromatic vinyl compounds, and copolymers of aromatic vinyl compounds and terpene compounds.

2. The tire according to claim 1,
wherein the aromatic vinyl polymer comprises a styrene unit.

3. The tire according to claim 1 or 2,
wherein the styrene-butadiene-based rubber has a styrene content of 30% by mass or higher.

4. The tire according to any one of claims 1 to 3,
wherein the rubber composition comprises 10 to 60 parts by mass of the at least one aromatic vinyl polymer per 100 parts by mass of the at least one rubber component.

5. The tire according to any one of claims 1 to 4,
wherein the rubber composition comprises 10 to 60 parts by mass in total of the at least one C5 resin and/or C5/C9 resin per 100 parts by mass of the at least one rubber component.

## Patentansprüche

1. Reifen, umfassend eine Lauffläche, die aus einer Kautschukzusammensetzung für Reifen gebildet ist, wobei die Kautschukzusammensetzung umfasst:
zumindest einen Kautschukbestandteil (A), der einen Kautschuk auf Isoprenbasis und einen Kautschuk auf Styrol-Butadien-Basis beinhaltet;
zumindest ein C5-Harz und/oder C5/C9-Harz (B); und
zumindest ein aromatisches Vinylpolymer (C), wobei das aromatische Vinylpolymer zumindest eines ist, das aus der Gruppe ausgewählt ist, die aus thermoplastischen aromatischen Vinylelastomeren, Homopolymeren aus aromatischen Vinylverbindungen und Copolymeren aus aromatischen Vinylverbindungen und Terpenverbindungen besteht.

2. Reifen nach Anspruch 1,
wobei das aromatische Vinylpolymer eine Styroleinheit umfasst.

3. Reifen nach Anspruch 1 oder 2,
wobei der Kautschuk auf Styrol-Butadien-Basis einen Styrolgehalt von 30 Masse-% oder mehr aufweist.

4. Reifen nach einem der Ansprüche 1 bis 3,
wobei die Kautschukzusammensetzung 10 bis 60 Massenteile des zumindest einen aromatischen Vinylpolymers pro 100 Massenteile des zumindest einen Kautschukbestandteils umfasst.

5. Reifen nach einem der Ansprüche 1 bis 4,
wobei die Kautschukzusammensetzung 10 bis 60 Massenteile in Summe des zumindest einen C5-Harzes und/oder C5/C9-Harzes pro 100 Massenteile des zumindest einen Kautschukbestandteils umfasst.

## Revendications

1. Pneu comprenant une bande de roulement formée à partir d'une composition de caoutchouc pour pneu,
la composition de caoutchouc comprenant :
au moins un composant de caoutchouc (A) comportant un caoutchouc à base d'isoprène et un caoutchouc à base de styrène-butadiène ;
au moins une résine C5 et/ou une résine C5/C9 (B) ; et
au moins un polymère vinylique aromatique (C), dans lequel le polymère vinylique aromatique est au moins un polymère choisi dans le groupe constitué par les élastomères thermoplastiques vinyliques aromatiques, les homopolymères de composés vinyliques aromatiques et les copolymères de composés vinyliques aromatiques et de composés terpéniques.

2. Pneu selon la revendication 1,
dans lequel le polymère vinylique aromatique comprend une unité de styrène.

3. Pneu selon la revendication 1 ou 2,
dans lequel le caoutchouc à base de styrène-butadiène a une teneur en styrène égale ou supérieure à 30 % en masse.

4. Pneu selon l'une des revendications 1 à 3,
dans lequel la composition de caoutchouc comprend de 10 à 60 parties en masse du au moins un polymère vinylique aromatique pour 100 parties en masse du au moins un composant de caoutchouc.

5. Pneu selon l'une des revendications 1 à 4,
dans lequel la composition de caoutchouc comprend 10 à 60 parties en masse au total de l'au moins une résine C5 et/ou de la résine C5/C9 pour 100 parties en masse de l'au moins un composant de caoutchouc.
